# EUROPÄISCHE PATENTANMELDUNG

(11) **EP 4 682 386 A1**
(43) Veröffentlichungstag der Anmeldung: **21.01.2026**
(21) Anmeldenummer: 25186341.1
(22) Anmeldetag: 30.06.2025
(51) Int. Cl.: F04D 13/02, F04D 13/14, F04D 15/00

(54) **REGELBARE KÜHLMITTELPUMPE MIT ELEKTRISCHER NEBENPUMPE**

(30) Priorität: 18.07.2024 DE 102024120435
(71) Anmelder: NIDEC GPM GmbH, 98673 Auengrund /OT Merbelsrod (DE)
(72) Erfinder: PAWELLEK, Franz, 96486 Lautertal (DE)
(74) Vertreter: Lenzing Gerber Stute

(57) **Zusammenfassung**

Die Erfindung betrifft eine regelbare Kühlmittelpumpe (1) mit einem Pumpengehäuse (2), einem Flügelrad (5), mit einer im Pumpengehäuse (2) drehbar gelagerten Pumpenwelle (3), auf deren freien Enden einerseits eine Riemenscheibe (4) und gegenüberliegend das Flügelrad (5) drehfest angeordnet sind und einem in einem Pumpeninnenraum (11) angeordneten, von einer Druckfeder (15) beaufschlagten, den Ausströmbereich des Flügelrades (5) der Kühlmittelpumpe regelnden Spaltringschieber (9), wobei die Kühlmittelpumpe (1) eine elektrische Nebenpumpe (20) aufweist, die Kühlmittel (7) aus dem Flügelradseitenraum ansaugt und mit erhöhtem Druck auf eine dem Flügelrad (5) abgewandete Seite des Spaltringschiebers (9) gibt, derart, dass der Spaltringschieber (9) gegen die Federkraft der Druckfeder (15) verschiebbar ist.

## Beschreibung

Die vorliegende Erfindung betrifft eine regelbare Kühlmittelpumpe mit den Merkmalen des Oberbegriffs des Anspruchs 1, ein Nutzfahrzeug mit einem Verbrennungsmotor und einem Kühlkreislauf und wenigstens einer regelbaren Kühlmittelpumpe sowie ein Verfahren zum Betreiben der regelbaren Kühlmittelpumpe.

Es ist bekannt regelbare Kühlmittelpumpen in Nutzfahrzeugen einzusetzen, um das Kühlwasser in einem geschlossenen Kreislauf durch Kühlkanäle des Kurbelgehäuses und des Zylinderkopfes im Verbrennungsmotor zu leiten und anschließend in einen Luft-Wasser-Wärmetauscher bzw. Kühler zurückzukühlen.

Häufig wird dabei eine insbesondere über einen Riementrieb direkt angetriebene Kühlmittelpumpe eingesetzt. Durch eine unmittelbare Koppelung zwischen der Kühlmittelpumpe und der Kurbelwelle stellt sich eine Abhängigkeit der Pumpendrehzahl von der Drehzahl des Verbrennungsmotors ein. Daraus folgt, dass bei einem Kaltstart des Verbrennungsmotors das Kühlmittel zirkuliert, wodurch sich eine gewünschte schnelle Erwärmung des Verbrennungsmotors und eine damit verbundene optimale Betriebstemperatur verzögert. Im Zuge der stetigen Optimierung von Verbrennungsmotoren im Hinblick auf Emission und Kraftstoffverbrauch ist es wichtig, den Motor nach dem Kaltstart möglichst schnell auf die Betriebstemperatur zu bringen und auf der optimalen Temperatur zu halten. Die Wasserpumpe soll gerade so viel Volumenstrom erzeugen, wie zum Aufrechterhalten der optimalen Temperatur erforderlich ist. Dadurch sinkt die Aufnahmeleistung der geregelten Wasserpumpe gegenüber einer ungeregelten Pumpe. Dadurch werden sowohl Reibungsverluste als auch Emissionswerte reduziert und der Kraftstoffverbrauch verringert. Um diesen Effekt zu erzielen, werden regelbare Kühlmittelpumpen eingesetzt, deren geförderter Volumenstrom auf den Kühlungsbedarf des Verbrennungsmotors abgestimmt werden kann.

Im Bereich der Nutzfahrzeuge ist es bekannt, Wasserpumpen mit regelbarer Visko-Kupplung sowie mit schaltbarer Wirbelstromkupplung einzusetzen. Beide Konzepte basieren auf einer Drehzahländerung des Flügelrads.

Es ist Aufgabe der vorliegenden Erfindung eine regelbare Kühlmittelpumpe anzugeben, die gegenüber bekannten Pumpen ein Potential zur Kraftstoffeinsprung hat, kostengünstig ist, sowie den Bauraumanforderungen bestehender Verbrennungsmotoren entspricht.

Die Aufgabe wird gelöst von einer regelbaren Kühlmittelpumpe mit den Merkmalen des Anspruchs 1, einem Nutzfahrzeug mit einem Verbrennungsmotor, einem Kühlkreislauf und wenigstens einer regelbaren Kühlmittelpumpe mit den Merkmalen des Anspruchs 9 sowie von einem Verfahren zum Betreiben einer regelbaren Kühlmittelpumpe mit den Merkmalen des Anspruchs 10.

Demnach ist eine regelbare Kühlmittelpumpe mit einem Pumpengehäuse, einem Flügelrad, mit einer im Pumpengehäuse drehbar gelagerten Pumpenwelle, auf deren freien Enden einerseits eine Riemenscheibe und gegenüberliegend das Flügelrad drehfest angeordnet und einem in einem Pumpeninnenraum angeordneten, von einer Druckfeder beaufschlagten, den Ausströmbereich des Flügelrades der Kühlmittelpumpe regelnden Spaltringschieber vorgesehen. Die Kühlmittelpumpe weist zudem eine elektrische Nebenpumpe auf, die Kühlmittel aus dem Flügelradseitenraum ansaugt und mit erhöhtem Druck auf eine dem Flügelrad abgewandte Seite des Spaltringschiebers gibt, derart, dass der Spaltringschieber gegen die Federkraft der Druckfeder verschiebbar ist.

Das Aktuatorsystem kann mit wenigen, kostengünstigen Bauteilen dargestellt werden. Infolge der direkten Schieberbeaufschlagung stehen große, hydraulisch wirksame Flächen bereit. Das System ist robust und langlebig. Das hydraulische Kraftniveau ist vorzugsweise derart hoch, dass die Federkraft der Druckfeder groß angesetzt werden kann, was in einem geringem Klemmrisiko für den Schieber resultiert.

Vorzugsweise ist die hydraulisch wirksame Fläche des Spaltringschiebers derart ausgebildet ist, dass eine Druckdifferenz von maximal 0,6 bar, insbesondere maximal 0,3 bar für eine Bewegung des Spaltringschiebers ausreicht. Die Nebenpumpe kann somit besonders kostengünstig ausgebildet werden.

Es ist vorteilhaft, wenn der Spaltringschieber einen Außenzylinder und eine Kreisscheibe umfasst, wobei in der Kreisscheibe eine Öffnung ist, durch die das Kühlmittel zum Saugstutzen der Nebenpumpe gelangt. Die Öffnung schließt sich bevorzugt in Radialrichtung unmittelbar an den Außenzylinder an. Dadurch ist der Zulaufdruck für die Nebenpumpe annähernd so groß wie der Druck, den die Pumpenstufe erreicht. Somit kann eine preiswerte Nebenpumpe mit geringer Druckerhöhung eingesetzt werden.

Vorzugsweise ist in die Öffnung ein Rohr eingepresst, das den Zulauf der Nebenpumpe vom Druckbereich trennt. In dem Rohr kann ein Grobfilter vorgehsehen sein. Optional kann auch ein Einlassdom im Gehäuse ausgebildet werden.

Der Spaltringschieber ist vorzugsweise auf einer Führungshülse im Pumpeninnenraum in der axialen Bewegung geführt und die Druckfeder stützt sich an der Führungshülse ab. Zur reibungsarmen Führung können zwischen der Führungshülse und dem Pumpeninnenraum und/oder dem Pumpeninnenraum und dem Außenzylinder offene Führungsbänder vorgesehen sein. Die offenen Führungsbänder dichten den Hydraulikraum nicht vollständig ab. Jedoch kann die Leckage problemlos durch die elektrische Kreiselpumpe ersetzt werden.

Es ist besonders kostengünstig, wenn die Nebenpumpe eine Zentrifugalpumpe mit freiliegendem Flügelrad ist und der Saugkanal und der Druckkanal in dem Pumpengehäuse ausgebildet sind. Dabei ist es vorteilhaft, wenn die Drehachse des Flügelrades der Nebenpumpe geneigt, insbesondere senkrecht zur Drehachse der Pumpenwelle liegt.

Außerdem ist ein Nutzfahrzeug mit einem Verbrennungsmotor, einem Kühlkreislauf zum Kühlen des Verbrennungsmotors, und wenigstens einer zuvor beschriebenen regelbaren Kühlmittelpumpe vorgesehen, wobei die Kühlmittelpumpe dazu ausgebildet ist, in dem Kühlkreislauf vorhandenes Kühlmittel zu transportieren, und die wenigstens eine regelbare Kühlmittelpumpe mittels Riementrieb von einer Kurbelwelle des Verbrennungsmotors angetrieben ist.

Zudem ist ein Verfahren zum Betreiben einer vorstehend beschriebenen regelbaren Kühlmittelpumpe mit folgenden Verfahrensschritten vorgesehen:
- Messen einer Ist-Temperatur in einem Kühlkreislauf und bestimmen einer Differenz zwischen Ist-Temperatur und Soll-Temperatur,
- Berechnen eines Steuerstroms für die Nebenpumpe basierend auf der Temperaturdifferenz mittels PID-Regler und Pulsweitenmodulation und
- Ansteuern der Nebenpumpe mit dem Steuerstrom.

Mittels der elektrischen Nebenpumpe ist so eine stufenlose Fördermengenanpassung der mechanischen Kühlmittelpumpe möglich, unabhängig von der Pumpendrehzahl.

Es ist auch denkbar, einen Wegsensor zur Bestimmung der Lage des Spaltringschiebers einzusetzen und die Lage als Rückführung in den Volumenstromregelkreis einfließen zu lassen. Hierzu kann ein mehrdimensionales Kennfeld im Motorsteuergerät abgelegt werden, aus welchem der Volumenstrom abhängig von der Pumpendrehzahl der Spaltringschieberposition, der Temperatur des Mediums und der Thermostatposition ausgelesen werden kann.

Nachfolgend wird ein Ausführungsbeispiel der vorliegenden Erfindung anhand der Zeichnung näher beschrieben. Gleiche Bauteile oder Bauteile mit gleichen Funktionen tragen gleiche Bezugszeichen. Es zeigen:
- Figur 1:: einen Längsschnitt durch eine regelbare Kühlmittelpumpe, sowie
- Figur 2:: ein Blockdiagramm, dass die Steuerung der regelbaren Kühlmittelpumpe beschreibt.

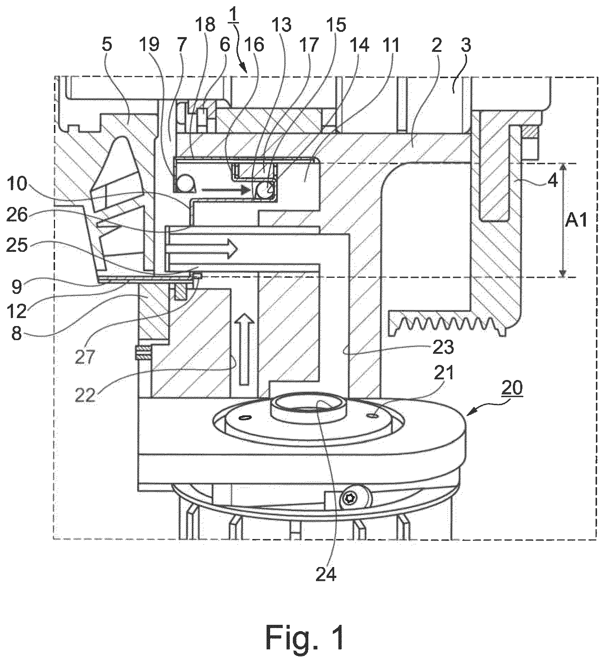

In der Figur 1 ist ein Teil einer regelbaren Kühlmittelpumpe 1 dargestellt. Die Kühlmittelpumpe 1 weist ein Pumpengehäuse 2 auf, in dem die Pumpenwelle 3 frei drehbar gelagert ist. Auf einem der beiden freien Enden der Pumpenwelle 3 ist außerhalb des Pumpengehäuses 2 drehfest eine Riemenscheibe 4 angeordnet. Ein Zugmittel des als Riementriebs ausgeführten Zugmitteltriebs verbindet die Riemenscheibe mit einer nicht dargestellten Riemenscheibe einer Kurbelwelle eines Verbrennermotors. Auf dem gegenüberliegenden freien Ende der Pumpenwelle 3 ist innerhalb des Pumpengehäuses 2 ein Flügelrad 5 aufgepresst. Somit wird von der Drehzahl der Riemenscheibe 4 die Drehzahl des Flügelrades 5 vorgegeben. Flügelradseitig ist auf der Pumpenwelle 3 eine Dichtungseinrichtung 6 vorgesehen, die den kühlmittelführenden Bereich von dem trockenen Bereich trennt. Bei rotierendem Flügelrad 5 im Betriebszustand der Kühlmittelpumpe 1 strömt das Kühlmittel 7 axial über einen nicht dargestellten Sauganschluss zu dem Flügelrad 5 und wird radial in einen nicht ersichtlichen Druckkanal 8 bzw. Spiralkanal geleitet. Dabei bildet ein mit dem Flügelrad 5 verbundener Pumpendeckel einen Übergang zwischen dem Sauganschluss und dem Druckkanal 8. Zur Einflussnahme auf das Fördervolumen der Kühlmittelpumpe 1 ist ein Spaltringschieber 9 vorgesehen. Der Spaltringschieber 9 weist eine Kreisscheibe 10 auf, die in einem im Pumpengehäuse 2 die Pumpenwelle 3 kreisringförmig und konzentrisch umgebenden Pumpeninnenraum 11 sitzt. An die Kreisscheibe 10 schließt sich umfangseitig ein Außenzylinder 12 an, der mit seinem Innendurchmesser den Außendurchmesser des Flügelrades 5 geringfügig überragt. Im Inneren schließt sich an die Kreisscheibe 10 ein Innenzylinder 13 an, der sich in Axialrichtung entgegengesetzt zum Außenzylinder 12 erstreckt und auf der Innenseite eine Kontur mit einem Federsitz 14 zur Aufnahme eines Federelementes 15 sowie umfangseitig daran anschließend eine Abkantung 16 zur Aufnahme eines offenen Führungsbandes 17 aufweist. Das Führungsband 17 ermöglicht eine reibungsarme radiale Führung des Spaltringschiebers 9 entlang einer Führungshülse 18, die auf der Innenseite des Pumpeninnenraums 7 sitzt. Die Führungshülse 18 hat an dem flügelradseitigen Ende einen Rand 19, der eine Abstützung des Federelementes 15 ermöglicht. Das Federelement 15 ist eine Druckfeder, die den Spaltringschieber 9 von dem Flügelrad 5 weg drückt und in einer offenen Stellung hält (fail-safe). Die Außenseite des Außenzylinders 12 ist ebenfalls mittels offenem Führungsband reibungsarm im Pumpengehäuse axial geführt. Die Stoßstellen der Führungsbänder am Spaltringschieber 9 wirken als Ablaufdrosseln, über die das beim Rückhub des Spaltringschiebers 9 verschobene Hydraulikvolumen zurück auf die flügelradnahe Seite des Spaltringschiebers 9 läuft. Der Spaltringschieber 9 ist als Tiefziehteil ausgeführt.

In die Kühlmittelpumpe 1 ist eine elektrische Nebenpumpe 20 in Form einer Kreiselpumpe integriert. Die elektrische Nebenpumpe 20 weist ein offenliegendes Flügelrad 21 und somit keinen eigenen Spiraldeckel auf. Eine Pumpenspirale ist aufgrund der kleinen Durchflussmenge nicht erforderlich. Eine konzentrische Kreisringleitvorrichtung ist ausreichend. Der Einlass und Auslass der Nebenpumpe 20 sind durch die Geometrie des Pumpengehäuses 2 der Kühlmittelpumpe 1 abgebildet. Das Pumpengehäuse 2 weist einen Druckkanal 22 auf, der sich von einem radial außenliegenden Bereich des Flügelrades 5 der elektrischen Kühlmittelpumpe bis zu dem Pumpeninnenraum 11 erstreckt und einen Saugkanal 23, der sich von einem am Flügelrad 21 ausgebildeten Saugstutzen 24 der Nebenpumpe 20 bis zum Pumpeninnenraum 11 erstreckt. Aus der Kreisringleitvorrichtung wird über eine Bohrung die Verbindung zur Rückseite des Spaltringschiebers 9 hergestellt.

Die Ein- bzw. Auslässe der beiden Kanäle 22,23 liegen mit Bezug zur Drehachse des Flügelrades 21 der elektrischen Nebenpumpe 20 radial zueinander beabstandet. Der Einlassbereich des Saugkanals 23 ist im Durchmesser an den Saugstutzen 24 der elektrischen Nebenpumpe 20 angepasst und gegenüber dem restlichen Bereich des Saugkanals 23 vergrößert. Der Saugkanal 23 ist mit dem rückseitigen Bereich des Flügelrades 5 der Kühlmittelpumpe 1 (Flügelradseitenraum) über ein Rohr 25 verbunden. Das Rohr 25 separiert den Saugbereich der Nebenpumpe 20 vom Druckbereich und erstreckt sich durch eine Öffnung 26 in der Kreisscheibe 10 des Spaltringschiebers 9, in die das Rohr 25 eingepresst ist. Die Öffnung 26 liegt angrenzend an den Außenzylinder 12 und somit in einem Bereich rückseitig des Flügelrades 5 in dem der Druck besonders groß ist. Der Zulaufdruck der Nebenpumpe 20 ist somit annähernd so hoch wie der Pumpenförderdruck der Kühlmittelpumpe 1. Das Rohr 25 kann einen Grobfilter aufweisen, um beispielsweise Späne aus dem Kühlmittel davon abzuhalten, in die elektrische Nebenpumpe zu gelangen. Weiterhin verhindert das Rohr 25 ein Verdrehen des Spaltringschiebers 9 durch die in Umfangsrichtung wirkenden Strömungskräfte. Die Drehzahl der Nebenpumpe 20 ist elektronisch regelbar. Mit Erhöhung der Drehzahl der Nebenpumpe steigt der Druck im Auslass. Die Nebenpumpe 20 dreht stets in die gleiche Richtung. Der Druckabgang der Nebenpumpe wird über den Druckkanal 22 auf die Rückwand des Spaltringschiebers 9 geleitet und wirkt primär gegen die Federrückstellkraft des Federelementes 15 in Schließrichtung.

Die Druckdifferenz zwischen Zulaufdruck und Druckabgang beträgt maximal 0,5 bar, insbesondere maximal 0,3 bar. Der Förderdruck der mechanischen Nebenpumpe beeinflusst das Kräftegleichgewicht des Spaltringschiebers 9 nicht nennenswert. Infolge der großen hydraulisch wirksamen Fläche A1 des Spaltringschiebers 9 ergeben bereits kleine Druckerhöhungen der Nebenpumpe 20 große Verschiebekräfte. Die Nebenpumpe 20 als Kreiselpumpe ist in der Lage, Leckageverluste durch die konstruktiv vorgesehenen Ablaufdrosseln im Hydraulikraum auszugleichen.

Für die Positionserfassung des Spaltringschiebers 9 als Rückführung für einen Regelkreis der Nebenpumpe 20 kann optional ein Wegsensor mit Target 27 am Spaltringschieber 9 angebracht werden.

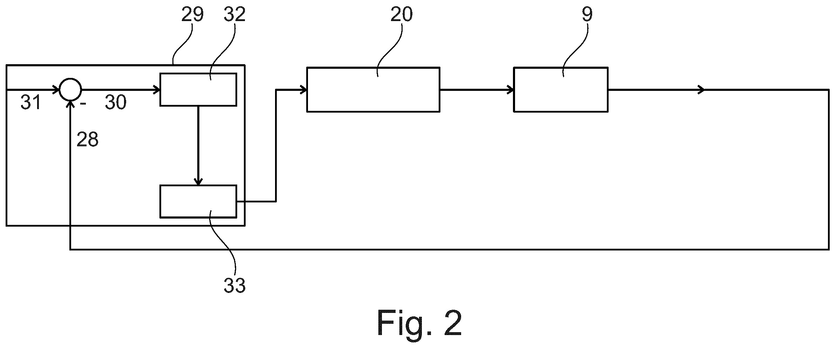

Figur 2 beschreibt eine Temperaturregelung mittels der regelbaren Kühlmittelpumpe 1.

Wie vorstehend beschrieben, wird der Spaltringschieber mittels Hydraulikdruck, der von der Nebenpumpe aufgebraucht wird bewegt. Die Anordnung des Federelementes ist derart gewählt, dass der Spaltringschieber sich in der geöffneten Stellung befindet, wenn kein Druck auf den Spaltringschieber von der Nebenpumpe ausgehend ausgeübt wird. Gegen die Federkraft der Druckfeder kann der Spaltringschieber durch Druckbeaufschlagung der Spaltringschieberfläche mittels der Nebenpumpe in der Art eines Kolbens bewegt werden und dadurch die Fördermenge der Kühlmittelpumpe stufenlos eingestellt werden.

Die aktuelle Kühlmitteltemperatur 28 wird von einem Temperatursensor auf der heißen Seite des Verbrennungsmotors überwacht. Die Motorsteuerung 29 der Nebenpumpe berechnet eine Temperaturdifferenz 30 zwischen der Ist-Temperatur 28 und einer Soll-Temperatur 31, die als Eingangssignal für einen PID (Proportional-Integral-Differential)-Regler 32 dient. Der kennfeldgesteuerte PID-Regler 32 gibt ein Ausgangssignal an einen Pulsweitenmodulationsprozessor 33 weiter. Der Pulsweitenmodulationsprozessor 33 erzeugt mittels Pulsweitenmodulation ein Steuerungssignal für die Zweitpumpe 20. Der Steuerstrom liegt in einem Bereich zwischen bis 1A. Durch Pulsweitenmodulation können bei konstanter Pulsfrequenz durch die Variation der Pulsbreite die Schieberhübe des Spaltringschiebers 9 und die Schieberöffnungszeiten derart variiert werden, dass eine aktive stufenlose Steuerung der Kühlmittelfördermenge möglich ist, so dass der Kühlmittelförderstrom, kontinuierlich in Abhängigkeit vom jeweiligen aktuellen Bedarf geregelt werden kann, um einerseits eine allmähliche optimale Erwärmung des Verbrennungsmotors zu gewährleisten und gleichzeitig nach der Erwärmung des Verbrennungsmotors die Motortemperatur im Dauerbetrieb so zu beeinflussen, dass im gesamten Arbeitsbereich des Verbrennungsmotors sowohl die Schadstoffemission wie auch die Reibungsverluste und der Kraftstoffverbrauch deutlich reduziert werden können.

Optional kann die Temperaturregelung auch last-abhängig durch das Motorsteuergerät ausgeführt werden. Hierzu ist ein mehrdimensionales Kennfeld für den Volumenstrom in Abhängigkeit von der Pumpendrehzahl, der Thermostatöffnung, der Schieberposition und der Kühlmitteltemperatur abgelegt. Die Schieberposition fließt hier als Rückführgröße ein.

## Patentansprüche

1. Regelbare Kühlmittelpumpe (1) mit einem Pumpengehäuse (2), einem Flügelrad (5), mit einer im Pumpengehäuse (2) drehbar gelagerten Pumpenwelle (3), auf deren freien Enden einerseits eine Riemenscheibe (4) und gegenüberliegend das Flügelrad (5) drehfest angeordnet sind und einem in einem Pumpeninnenraum (11) angeordneten, von einer Druckfeder (15) beaufschlagten, den Ausströmbereich des Flügelrades (5) der Kühlmittelpumpe regelnden Spaltringschieber (9), **dadurch gekennzeichnet, dass** die Kühlmittelpumpe (1) eine elektrische Nebenpumpe (20) aufweist, die Kühlmittel (7) aus dem Flügelradseitenraum ansaugt und mit erhöhtem Druck auf eine dem Flügelrad (5) abgewandete Seite des Spaltringschiebers (9) gibt, derart, dass der Spaltringschieber (9) gegen die Federkraft der Druckfeder (15) verschiebbar ist.

2. Regelbare Kühlmittelpumpe nach Anspruch 1, **dadurch gekennzeichnet, dass** die hydraulisch wirksame Fläche (A1) des Spaltringschiebers (9) derart ausgebildet ist, dass eine Druckdifferenz von maximal 0,6 bar für eine Bewegung des Spaltringschiebers (9) ausreicht.

3. Regelbare Kühlmittelpumpe nach Anspruch 1 oder 2, **dadurch gekennzeichnet, dass** der Spaltringschieber (9) einen Außenzylinder (12) und eine Kreisscheibe (10) umfasst, wobei in der Kreisscheibe (10) eine Öffnung (26) ist, durch die das Kühlmittel (7) zum Saugstutzen (24) der Nebenpumpe (20) gelangt.

4. Regelbare Kühlmittelpumpe nach Anspruch 3, **dadurch gekennzeichnet, dass** sich die Öffnung (26) in Radialrichtung unmittelbar an den Außenzylinder (12) anschließt.

5. Regelbare Kühlmittelpumpe nach Anspruch 3 oder 4, **dadurch gekennzeichnet, dass** in die Öffnung (26) ein Rohr (25) eingepresst ist, das den Zulauf der Nebenpumpe (20) vom deren Druckbereich trennt.

6. Regelbare Kühlmittelpumpe nach einem der vorhergehenden Ansprüche, **dadurch gekennzeichnet, dass** der Spaltringschieber (9) auf einer Führungshülse (18) im Pumpeninnenraum (11) in der axialen Bewegung geführt ist und die Druckfeder (15) sich an der Führungshülse (18) abstützt.

7. Regelbare Kühlmittelpumpe nach einem der vorhergehenden Ansprüche, **dadurch gekennzeichnet, dass** die Nebenpumpe (20) eine Zentrifugalpumpe mit freiliegendem Flügelrad (21) ist und der Saugkanal (23) und der Druckkanal (22) der Nebenpumpe (20) in dem Pumpengehäuse (2) ausgebildet sind.

8. Regelbare Kühlmittelpumpe nach Anspruch 7, **dadurch gekennzeichnet, dass** die Drehachse des Flügelrades (21) der Nebenpumpe (20) senkrecht zur Drehachse der Pumpenwelle (3) liegt.

9. Nutzfahrzeug mit einem Verbrennungsmotor, einem Kühlkreislauf zum Kühlen des Verbrennungsmotors, und wenigstens einer regelbaren Kühlmittelpumpe (1) nach einem der vorhergehenden Ansprüche, die dazu ausgebildet ist, in dem Kühlkreislauf vorhandenes Kühlmittel zu transportieren, wobei die wenigstens eine regelbare Kühlmittelpumpe (1) mittels Riementrieb von einer Kurbelwelle des Verbrennungsmotors angetrieben ist.

10. Verfahren zum Betreiben einer regelbaren Kühlmittelpumpe (1) nach einem der vorhergehenden Ansprüche 1 bis 8, mit folgenden Verfahrensschritten:
- Messen einer Ist-Temperatur (28) in einem Kühlkreislauf und bestimmen einer Differenz (30) zwischen der Ist-Temperatur (28) und einer Soll-Temperatur (31) und
- Berechnen eines Steuerstroms für die Nebenpumpe (20) mittels PID-Regler (32) und Pulsweitenmodulation (33) und
- Ansteuern der Nebenpumpe (20) mit dem Steuerstrom.
